# EUROPEAN PATENT APPLICATION

(11) **EP 4 310 370 A1**
(43) Date of publication of application: **24.01.2024**
(21) Application number: 22185784.0
(22) Date of filing: 19.07.2022
(51) Int. Cl.: F16J 9/20, F16J 9/26, F16J 9/06

(54) **PISTON RING**

(71) Applicant: MAHLE International GmbH, 70376 Stuttgart (DE); Mahle Metal Leve S/A, 13210-877 Jundiaí, SP (BR)
(72) Inventor: FINETO, Bruno, 01138-010 Barra-Funda (BR); MOURA DE OLIVEIRA, Marcelo, 37500-076 Itajubá (BR); BRUNO, Rafael Antonio, 04676-042 Sao Paulo (BR); BETTINI RABELLO, Rafael, 13210-877 Jundiaí, Sao Paulo (BR)
(74) Representative: BRP Renaud & Partner mbB Rechtsanwälte Patentanwälte Steuerberater

(57) **Abstract**

The present invention relates to a piston ring destined to be used for internal combustion engines, consisting of two segments and of a spacer, wherein, given its constructive configuration, the possibility exists to increase the initial unit pressure of the ring at the skirt of the cylinder, allowing a low-level oil consumption during the run-in phase. The steel piston ring consisting of a spacer or expansion element and two segments, wherein the segments have a radial dimension (3) between 1.50 mm and 1.90 mm, and a height (2) between 0.30 mm and 0.40 mm,
a concave profile with recesses (4) between 0.015 mm and 0.030 mm, with a clearance (5) of 0.150 mm, wherein the segments are wound by means of a matrix box device (10) and of a roller, wherein the ring has a circularity, expressed in the form of a decomposition as a Fourier series, with amplitudes (N) smaller than 0.10 µm for orders higher than 10.

## Description

The present invention relates to a piston ring, destined to be used for internal combustion engines, consisting of two segments and a spacer or expansion element, wherein the ring comprises an improved constructive configuration.

### State of the art

Internal combustion engines are mechanisms that transform energy, and are used for the majority of motor vehicles, and basically consist of two main parts: one or more engine heads and the engine block itself. The combustion chambers are situated at the base of the engine head(s) (in the case of diesel engines, the combustion chambers are usually situated in the piston heads), whereas the cylinders and the shaft for the valves or the crankshaft are situated in the engine block. The crankshaft assembly consists of pistons, rods, and the crankshaft.

The engine converts the energy produced by the combustion of a mixture (fuel and air) in the combustion chambers into mechanical energy which in turn is used to drive the wheels.

As the driving force necessary to move the motor vehicle is the result of the combustion of the mixture consisting of air and fuel in the combustion chamber, and in order to assure a homogeneous combustion without burning oil, and in order to avoid too much gas escaping from the cylinder into the crankcase, it is necessary to make use of rings in order to guarantee an adequate sealing of the space between the piston and the cylinder wall.

Over the course of the years, technological knowledge has allowed a certain degree of perfection for piston rings, as well as for production methods therefor.

The reason for this is that, keeping in mind the various advantages offered or made possible by internal combustion engines, it is necessary to continually improve these elements, guaranteeing the ever-increasing safety, durability, and efficiency of these engines.

Therefore, although they adequately meet the requirements for the engines for which they were developed, the present piston rings for internal combustion engines present a certain number of disadvantages that can be improved, more specifically when dealing with the constructive configuration.

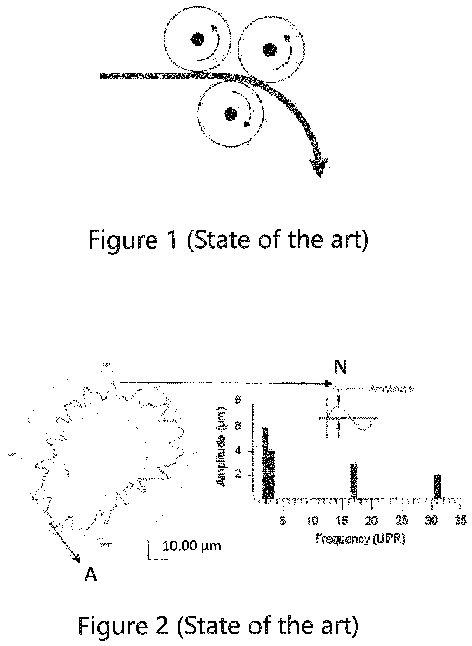

As can be seen in figure 1, the piston rings from the state of the art are usually produced by means of a process using three rollers, the function of which is to carry out the winding of the segment.

It is worth noting here that the initial procedure for winding the segment is of extreme importance in attaining the form of a ring, as it is at this stage that the symmetry and the profile offset of the ring can be guaranteed.

Moreover, one of the parameters that can be used to evaluate, after the winding process of the piston ring, whether the symmetry and the offset of the profile of the ring are adequate, is the analysis of the circular character by means of a Fourier decomposition.

In other words, the analysis of the circular character by means of a Fourier decomposition of a piston ring allows the identification of a possible improved constructive configuration of the piston ring.

Figure 2 shows the analysis of the circularity by means of a Fourier decomposition of a piston ring according to the state of the art, produced by means of a process using three rollers, in which it is possible to observe the different circularity levels and the amplitude of the Fourier orders N of an original circumferential profile A.

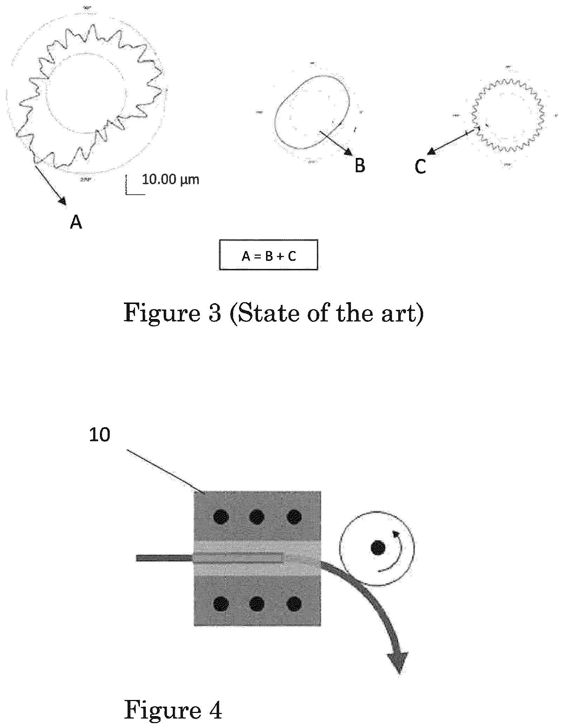

In further detail, as can be seen in figure 3, the analysis of the circularity by means of a Fourier decomposition consists of a decomposition of the original form, in other words the original circumferential profile A, using a set of predetermined forms B, C, the amplitude and the phase of which can be adjusted in such a way that the original form is reconstructed with the least possible error.

The set of predetermined forms can for example consist of a predetermined form B of a second order component, represented by two formed points on the aforementioned predetermined form B; and a predetermined form C of a 31^{st} order component, represented by 31 formed points on the aforementioned predetermined form C.

However, the smaller the amplitudes of the figures of which the original form is composed, the more the original frame approximates a perfectly circular form, without deformations, which means that the smaller the Fourier amplitudes, the more the constructive configuration of the piston ring will be improved.

That said, and as will be described hereinafter, the state of the art does not comprise a piston ring in which the symmetry and the profile offset of the piston ring have an improved constructive configuration.

### Objective of the invention

A first objective of the present invention is to provide a ring with an improved constructive configuration, with which it is possible to increase the initial unit pressure of the ring at the skirt of the cylinder, allowing a low-level oil consumption during the run-in phase.

A second objective of the present invention consists of providing a ring with an improved constructive configuration, allowing a more restricted emission of particles in a new engine, or in other words, during the first hours of functioning of the engine.

A third objective of the present invention consists of providing a ring with an improved constructive configuration, allowing an improved oil consumption of the engine, and consequently a lower particle emission into the environment.

### Short description of the invention

The goals and objectives of the present invention are realised by a piston ring made of steel, consisting of a spacer or expansion element, and two segments, in which the segments have a radial dimension of 1.50 mm to 1.90 mm, and a height of 0.30 mm to 0.40 mm, as well as a concave profile with recesses between 0.015 mm and 0.030 mm, with a standard measurement of 0.150 mm, the segments being wound by means of a matrix box device and a roller, wherein the ring has a circularity, expressed in the form of a decomposition as a Fourier series, with amplitudes smaller than 0.10 µm for orders higher than 10.

In an embodiment, the piston ring comprises a top with a horizontal offset up to 0.005 mm, preferably smaller than 0.002 mm.

In another embodiment, the piston ring comprises a top with an asymmetry of the size of the profile with respect to the base of up to 0.010 mm, preferably up to 0.003 mm.

In yet another embodiment, the piston ring comprises a PVD and/or a DLC layer on the contact surface of at least one segment.

In yet another embodiment, the piston ring comprises a base material made of nitrated stainless steel.

In yet another embodiment, the piston ring comprises a base material made of carbon steel.

### Short description of the figures

The present invention shall hereafter be described in more detail, wherein reference is made to an example, as can be seen in the drawings.
Figure 1 shows a schematic representation of a winding system for a piston ring according to the state of the art;
Figure 2 shows a representation of an analysis of circularity by means of a Fourier decomposition of a piston ring according to the state of the art;
Figure 3 shows a representation of the decomposition of a given circularity in known parts for the Fourier decomposition;
Figure 4 shows a schematic representation of a winding system for a piston ring according to the present invention;
Figure 5 shows a schematic representation of the segment of the piston ring according to the present invention;
Figure 6 shows a schematic representation of the profile of the contact surface of the segment of the piston ring according to the present invention, showing the clearance and the recess;
Figure 7 shows a schematic representation of the profile of the contact surface of the segment of the piston ring according to the present invention, showing the offset of the top;
Figure 8 shows a schematic representation of the profile of the contact surface of the segment of the piston ring according to the present invention, showing the clearance and the asymmetry of the recess;
Figure 9 shows a graphic of the analysis of the Fourier orders after winding the piston ring according to the present invention, as well as of a piston ring according to the state of the art;
Figure 10 shows a comparative graphic of the oil consumption of a piston ring according to the present invention and a piston ring according to the state of the art; and
Figure 11 shows a comparative graphic of the quantity of emitted particles before and after running in the piston ring according to the present invention, and a piston ring according to the state of the art.

### Detailed description of the figures

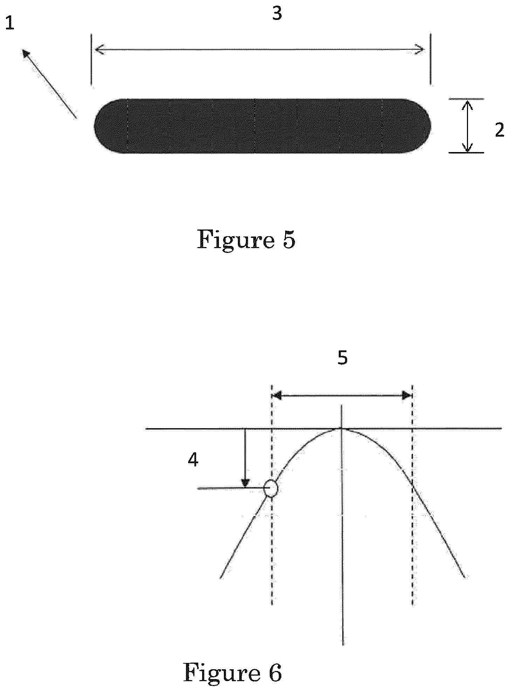

As can be seen in figures 4 to 6, the piston ring according to the present invention consists of a spacer or expansion element and two segments, wherein the segments 1 have a radial dimension 3 between 1.50 mm and 1.90 mm, and a height 2 between 0.30 mm and 0.40 mm, a concave profile with recesses 4 between 0.015 mm and 0.030 mm, and a clearance 5 of 0.150 mm, wherein the segments are wound by means of a matrix box device 10 and of a roller, wherein the ring has a circularity, expressed in the form of a decomposition in a Fourier series, with amplitude N not greater than 0.10 µ for orders higher than 10.

Interestingly, this configuration of the piston ring allows a more aggressive scraping of oil film, which implies that the quantity of oil remaining on the walls of the cylinder is reduced and, hence, also the overall oil consumption of the engine.

Another advantage is that the smaller amplitudes of the individual forms of each order of the Fourier series result in a more circular ring, with fewer deformations on the external surface and, hence, with an improved constructive configuration of the piston ring, and a more continuous contact with the skirt of the cylinder.

As already mentioned, the initial process of winding the segment is of extreme importance to realise an improved constructive configuration of the piston ring, in such a way that the symmetry and offset of the profile trim can be guaranteed.

One notices that the matrix box device 10, in comparison to the state of the art, substitutes two of the rollers of the conventional winding system, being a device of the guiding type, a device that receives the segment and guides it to the roller where the lining of the segment takes place in accordance with the diameter of the cylinder of the engine.

In this process of receiving and guiding, the function of the matrix box device is to prepare and condition the segment for improved winding and, consequently, improved constructive configuration of the piston ring.

As can be seen in figure 4, before the actual winding is carried out by the roller, the segment is introduced into one end of the matrix box device 10, after which it runs through a channel of the device and leaves the device at the other end, guided by the roller.

More specifically during the passage through the channel of the matrix box device 10, the segment presents the necessary conditions for improved winding of the segment.

Therefore, after the segment runs through the matrix box device, after the winding phase and all the machining phases, can be observed a Fourier amplitude level and a circularity that are even lower than those observed after steadily rolling the segment, most conveniently resulting in a ring with a circularity, expressed in a decomposition form of a Fourier series with amplitude N not greater than 0.10 µm for orders higher than 10.

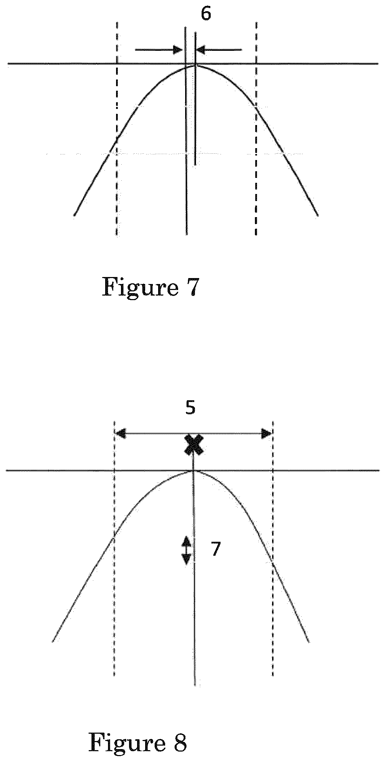

As can be seen in figure 7, in which a preferred but in no way limiting embodiment can be seen, the piston ring according to the present invention can comprise a top with a horizontal offset 6 of up to 0.005 mm, preferably smaller than 0.002 mm.

As can be seen in figure 8, in which a preferred but in no way limiting embodiment can be seen, the piston ring according to the present invention can comprise a top with an asymmetry of the sides of the profile with respect to the base 7 of up to 0.010 mm, preferably up to 0.003 mm.

Preferably, the values for the vertical offset and for the asymmetry of the top are minimal compared to the state of the art, giving the piston ring according to the invention an improved contact surface.

It has to be mentioned that the aforementioned values are the result of the improved winding, as the latter makes for a shorter machining time during the production process of the ring.

Moreover, the object of the present invention can comprise a PVD and/or a DLC layer on the contact surface of at least one segment, as well as a base material made of nitrated stainless steel, or a base material made of carbon steel.

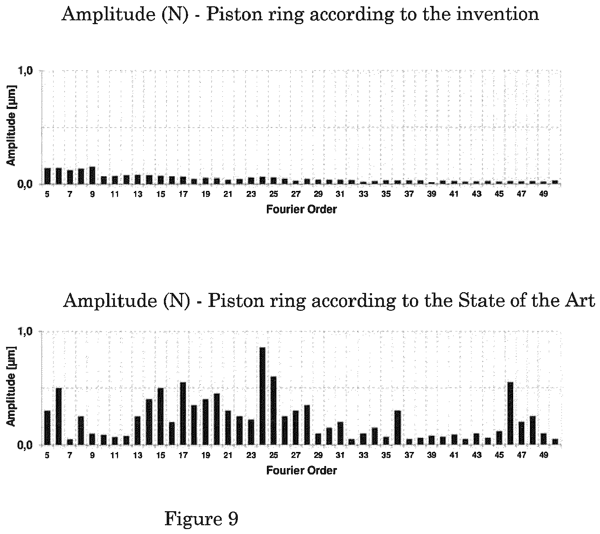

Furthermore, in order to show the improved constructive configuration of the ring, or in other words the lower levels of circularity and amplitude of the Fourier orders of the segments, figure 9 shows a representation of an analysis of the Fourier orders after the winding of the piston ring according to the present invention, as well as of a piston ring according to the state of the art.

As can be seen, in the piston ring according to the present invention, the Fourier level was reduced considerably after the initial winding operation of the segment by means of the matrix box device 10 and a roller, compared to the Fourier level of rings according to the state of the art.

This way the object of the present invention interestingly distinguishes itself from the state of the art, as the lower the Fourier amplitudes, the more improved the constructive configuration of the piston ring will be.

Moreover, the improved constructive configuration of the piston ring according to the present invention makes it possible to use a higher superficial pressure against the cylinder skirt, allowing a lower oil consumption during the run-in phase of the engine.

The same applies to the emissions of particulate material in the case of a new engine, in which the results of the emissions are shown to be more robust and lower in comparison to the initial emission of particulate material.

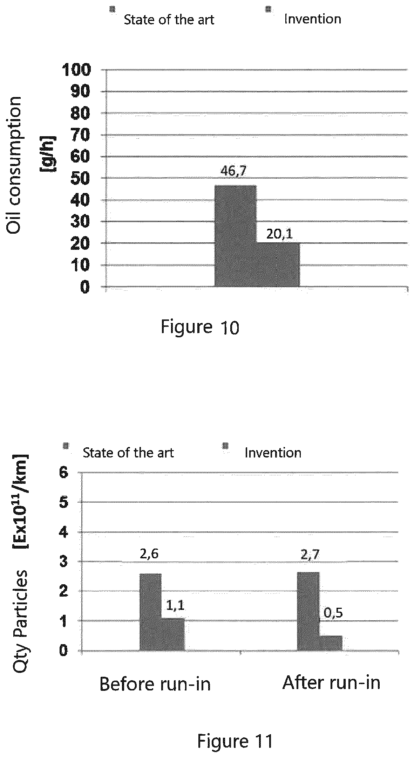

Preferably, and as can be seen in figure 10, engine tests carried out to determine the oil consumption of a diesel internal combustion engine show that the piston ring according to the present invention led to a reduction of more than 50% in oil consumption in comparison to piston rings according to the state of the art.

Moreover, as can be seen in figure 11, engine tests carried out to evaluate the emission of particulate material of a diesel internal combustion engine show that the piston ring according to the present invention led to a 58% reduction in emitted particulate material, at the beginning of the test, and to a 72% reduction with the engine run in, and this in comparison to piston rings according to the state of the art.

Having described here a practical preferred example of the invention, it goes without saying that the scope of the present invention comprises other possible variations, wherein the scope of the invention is only limited by the attached claims, including the possible equivalents.

## Claims

1. Steel piston ring, consisting of a spacer or expansion element and two segments, wherein the segments
have a radial dimension (3) between 1.50 mm and 1.90 mm, and a height (2) between 0.30 mm and 0.40 mm,
have a concave profile with recesses (4) between 0.015 mm and 0.030 mm, and with a clearance (5) of 0.150 mm,
**characterised in that** the segments are wound by means of a matrix box device (10) and of a roller,
that the ring has a circularity, expressed in the form of a decomposition as a Fourier series, with an amplitude (N) for orders higher than 10 which is not greater than 0.10 µm.

2. Piston ring, according to claim 1, **characterised in that** it presents a top with a horizontal offset (6) up to 0.005 mm, preferably up to 0.002 mm.

3. Piston ring, according to claim 1, **characterised in that** it presents a top with an asymmetry of the sides of the profile with respect to the base (7) of up to 0.010 mm, preferably up to 0.003 mm.

4. Piston ring, according to claim 1, **characterised in that** it comprises a PVD and/or a DLC layer on the contact surface of at least one segment.

5. Piston ring, according to claim 1, **characterised in that** it comprises a base material made of nitrated stainless steel.

6. Piston ring, according to claim 1, **characterised in that** it comprises a base material made of carbon steel.
